# EUROPEAN PATENT APPLICATION

(11) **EP 4 407 004 A1**
(43) Date of publication of application: **31.07.2024**
(21) Application number: 23753123.1
(22) Date of filing: 08.02.2023
(51) Int. Cl.: C08L 77/00, C08L 77/02, C08L 23/26

(54) **POLYMER COMPOSITION COMPRISING RECYCLED POLYAMIDE, AND ELECTRONIC DEVICE AND ELECTRONIC DEVICE PROTECTION CASE COMPRISING SAME**

(30) Priority: 08.02.2022 KR 20220016468
(71) Applicant: Samsung Electronics Co., Ltd., Suwon-si, Gyeonggi-do 16677 (KR); Hanwha Compound Corporation, Yeosu-si Jeollanam-do 59616 (KR)
(72) Inventor: HWANG, Hangyu, Suwon-si, Gyeonggi-do 16677 (KR); RATHORE, Pranveer Singh, Suwon-si, Gyeonggi-do 16677 (KR); KIM, Kyungrae, Yeosu-si, Jeollanam-do 59616 (KR); SHIN, Changyun, Yeosu-si, Jeollanam-do 59616 (KR); JEONG, Sambong, Yeosu-si, Jeollanam-do 59616 (KR); HAN, Gukhyun, Yeosu-si, Jeollanam-do 59616 (KR); KIM, Bongjoon, Suwon-si, Gyeonggi-do 16677 (KR); LEE, Jinsoo, Suwon-si, Gyeonggi-do 16677 (KR)
(74) Representative: Gulde & Partner
(86) International application number: PCT/KR2023/001771
(87) International publication number: WO 2023/153775

(57) **Abstract**

Disclosed are polymer compositions including a recycled polyamide and an electronic device and a protective case for an electronic device including the same. The polymer composition according to various embodiments of the present disclosure may include a recycled polyamide, a new polyamide including at least one polyamide component, a glycidyl group-modified ethylene-octene-based copolymer, and an inorganic filler. In some embodiments, the recycled polyamide may include what is collected from marine plastic waste.

## Description

### [Technical Field]

Various embodiments disclosed in this document relate to polymer compositions, more specifically, polymer compositions including recycled polyamide and an electronic device and protective case for the electronic device including the same.

### [Background Art]

Polymers are inexpensive and have good machinability and physical properties, and so they are used in various fields. Because of their good strength, impact resistance, non-conductivity, and radio wave transmission, polymers are utilized in applications such as frames that support internal components of electronic devices and/or cases that protect the exterior of electronic devices. In particular, polyamide-based polymers are widely used in the fields described above because of their high tensile strength, impact strength, and easy molding.

In manufacturing polymer products, polymer scrap such as gates, sprues, and/or runners may be generated in the process of injecting a resin into a mold for injection molding. In addition, at the end of the life cycle of a polymer product, polymer waste may occur. In the case that the above-mentioned polymer scrap and polymer waste are incinerated, landfilled, or dumped, air pollution, soil pollution, and marine plastic pollution may be caused. Accordingly, the above-described polymer scrap and waste may be collected and recycled by being input as a raw material in the production of a polymer product.

### [Disclosure of Invention]

### [Technical Problem]

In the case of mixing new polyamide raw materials and recycled polyamide in the production of polyamide products to recycle polyamide waste and scrap, poor appearance due to lower melt viscosity of resin and poor appearance due to gas generation may occur, and physical properties such as tensile strength and/or impact strength of the manufactured molded article may be deteriorated. The cause of this deterioration may be that the molecular structure of the recycled polyamide has changed because of thermal decomposition by thermal cycling during product manufacturing, hydrolysis by moisture exposure after product manufacturing, and deterioration by ultraviolet exposure.

Various embodiments disclosed in this document may provide a polymer composition including a recycled polyamide that has improved physical properties and appearance and an electronic device and a protective case including the same.

### [Solution to Problem]

The polymer composition according to various embodiments of the present disclosure may comprise a recycled polyamide, a new polyamide including at least one polyamide component, a glycidyl group-modified ethylene-octene-based copolymer, and an inorganic filler. In some embodiments, the recycled polyamide may include a polyamide collected from marine plastic waste.

In some embodiments, 10 to 30% by weight of the recycled polyamide, 1 to 50% by weight of the new polyamide, 0.1 to 10% by weight of the glycidyl group-modified ethylene-octene-based copolymer, and 30 to 70% by weight of the inorganic filler may be included.

In some embodiments, the new polyamide may include polyamide PA6 and a modified polyamide having a benzene ring. In some embodiments, the modified polyamide may include at least one of polyamide PA6I, a copolymer of polyamide PA6I and PA6T, and polyamide MXD6. In some embodiments, 1 to 30% by weight of the polyamide PA6 and 1 to 20% by weight of the modified polyamide may be included.

An electronic device according to other embodiments of the present disclosure may comprise a display disposed toward a first direction; a housing including an inner space having an opening opened in the first direction; a substrate portion disposed inside the housing; and a support member supporting the substrate portion with respect to the housing and including a non-conductive material, wherein the support member includes a polymer composition including a recycled polyamide, a new polyamide including at least one polyamide component, glycidyl group-modified ethylene-octene-based copolymer, and an inorganic filler. In some embodiments of the electronic device, the recycled polyamide may include a polyamide collected from marine plastic waste.

In some embodiments of the electronic device, the new polyamide may include polyamide PA6 and a modified polyamide having a benzene ring.

In some embodiments, the polymer composition may have a tensile strength of 2300 kgf/cm² or more. In some embodiments, the polymer composition may have a notched Izod impact strength of 14 kgf cm/cm or more. In some embodiments, the polymer composition may have a thermal stability with a weight loss of 2.5% or less when heated at 230°C for 30 minutes. In some embodiments, the polymer composition may have a moisture absorption of 1% by weight or less when immersed in water for 24 hours.

A protective case according to other embodiments of the present disclosure may comprise a polymer composition including a recycled polyamide, a new polyamide including at least one polyamide component, glycidyl group-modified ethylene-octene-based copolymer,

and an inorganic filler, wherein the protective case is disposed adjacent to at least a portion of an external surface of an electronic device to protect the electronic device from external impact. In some embodiments of the protective case, the recycled polyamide may include a polyamide collected from marine plastic waste.

In some embodiments of the protective case, the new polyamide may include polyamide PA6 and a modified polyamide having a benzene ring.

### [Advantageous Effects of Invention]

According to various embodiments disclosed herein, a polymer composition that recycles polyamide waste and improves physical properties and appearance and an electronic device and a protective case including the same may be provided.

### [Brief Description of Drawings]

In connection with the description of the drawings, the same or similar reference numerals may be used for the same or similar components.
FIGS. 1a and 1b are views comparing the appearance of products manufactured by injecting a polymer composition according to an embodiment of the present disclosure and a polymer composition according to a comparative example including recycled polyamide, respectively.
FIG. 2 is a perspective view of a front surface of an electronic device according to some embodiments of the present disclosure.
FIG. 3 is a perspective view of a rear surface of the electronic device of FIG. 2.
FIG. 4 is an exploded perspective view of the electronic device of FIG. 2.
FIG. 5 is a perspective view and a plane view illustrating various embodiments of a support member of an electronic device.
FIG. 6a is a perspective view of a front surface of an electronic device according to various embodiments of the present disclosure. FIG. 6b is a perspective view of a rear surface of an electronic device according to various embodiments of the present disclosure.
FIG. 6c is an exploded perspective view of an electronic device according to various embodiments of the present disclosure.
FIG. 6d is a plane view illustrating first support members according to various embodiments of the present disclosure.
FIG. 6e is a plane view illustrating second support members according to various embodiments of the present disclosure.
FIG. 6f is a view showing a key bracket according to various embodiments of the present disclosure.
FIG. 7a is an exploded perspective view of a protective cover and an electronic device mounted thereon according to various embodiments of the present disclosure.
FIG. 7b is a perspective view of a protective cover on which an electronic device is mounted according to various embodiments of the present disclosure.
FIG. 7c is a view illustrating a stylus pen cover according to some embodiments of the present disclosure.

### [Mode for the Invention]

Although, hereinafter, preferred examples are presented to aid the understanding of the present disclosure, the following examples are merely illustrative of the present disclosure and it is apparent to those skilled in the art that various changes and modifications are possible within the scope and spirit of the present disclosure, and it is natural that changes and modifications fall within the scope of the appended claims.

The polymer composition according to various embodiments of the present disclosure may include a recycled polyamide, a new polyamide, a glycidyl group-modified ethylene-octene-based copolymer, and an inorganic filler.

The recycled polyamide may include polyamide scrap such as runners, sprues and/or gates generated during the injection molding process, and materials molded from polyamide waste such as marine waste plastics, waste nets, waste fabrics, waste cloths, waste fibers, and/or waste films. In some embodiments, the recycled polyamide may include polyamide 6 (PA6). The recycled polyamide may be, but is not limited to, crystalline, semi-crystalline, amorphous, or a mixture thereof. The polymer composition of the present disclosure may recycle polyamide waste by including recycled polyamide. For example, it is possible to contribute to the reduction of marine plastic pollution by collecting and recycling waste nets made of polyamide 6, which account for the highest proportion of marine plastic pollutants. In some embodiments, recycled polyamide may be included in the polymer composition in an amount of 10 to 30% by weight or less. In the case that the content of the recycled polyamide exceeds the above numerical range, mechanical properties of the polymer composition may be deteriorated or of poor appearance because gas generation may become severe.

The new polyamide may be a polyamide resin prepared directly from a polyamide raw material without undergoing a recycling process. The new polyamide may include polyamide 6 (PA6), polyamide 66 (PA66), modified polyamide, or various polymers having amide linkages similar thereto. The polymer composition of the present disclosure may contain 1 to 30% by weight of the new polyamide.

The new polyamide may include polyamide 6 (PA6). Polyamide 6 may be synthesized by dehydration condensation polymerization of 6-aminohexanoic acid into a polymer having a molecular structure as shown in Formula 1 below.

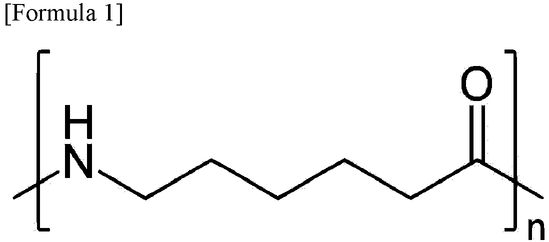

In the above formula, n is an arbitrary integer.

According to some embodiments, the new polyamide may include various modified polyamides. The modified polyamide, as a polyamide including a benzene ring in the main chain, may have a structure in which an aromatic dicarboxylic acid monomer and an aliphatic or alicyclic diamine are condensation-polymerized, or an aromatic diamine and an aliphatic or alicyclic dicarboxylic acid are condensation-polymerized. For example, the new polyamide may include at least one of polyamide PA6I, polyamide PA6I/PA6T, and/or polyamide MXD6. The polyamide PA6I may be poly-isophthalamide obtained by polymerizing hexamethylene diamine and isophthalic acid and having a molecular structure as shown in Formula 2 below.

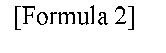

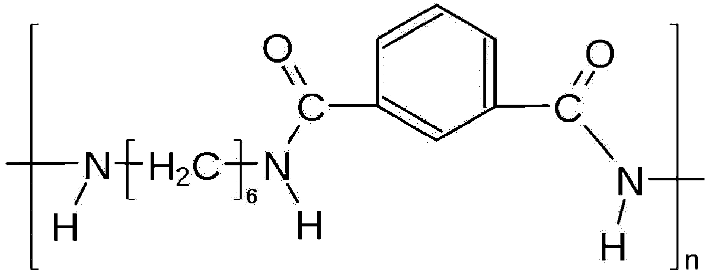

In Formula 2, n is an arbitrary integer.

The polyamide PA6I/PA6T may be, for example, a copolymer of terephthalamide and isophthalamide and have a molecular structure as shown in the following Formula 3 below.

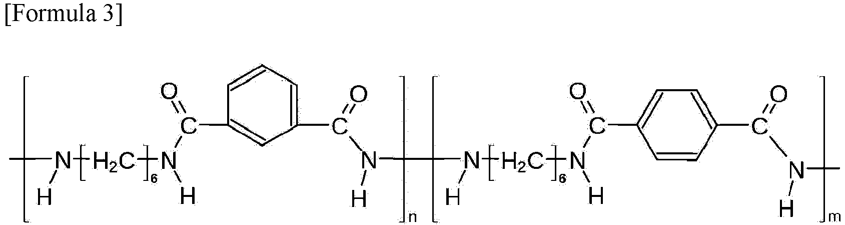

In Formula 3, n and m are arbitrary integers. Although the above Formula 3 describes a block copolymer of poly-terephthalamide and poly-isophthalamide, this is exemplary, and the polyamide PA6I/6T may be a block copolymer, an alternating copolymer, or a random copolymer. The polymer of terephthalamide tends to have a high degree of crystallinity, whereas the polymer of isophthalamide tends to have a low degree of crystallinity; therefore the polyamide PA6I/6T, the copolymer of terephthalamide and isophthalamide, may improve the physical properties of the polymer composition by adjusting the crystallinity optimally.

The polyamide MXD6 may be a polymer obtained by dehydration condensation polymerization of xylenediamine and adipic acid and have a molecular structure as shown in Formula 4 below.

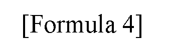

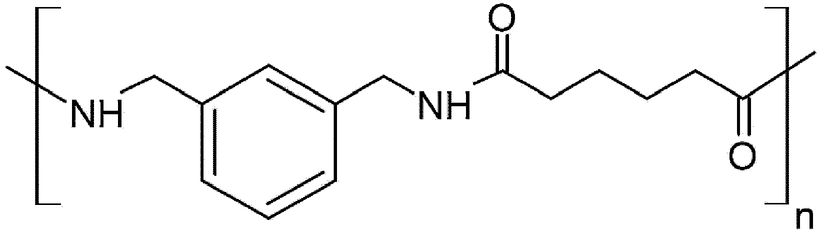

In Formula 4, n is an arbitrary integer.

As described above, the modified polyamide may include a benzene ring in the monomer. By mixing the modified polyamide including a benzene ring into the polymer composition, it is possible to increase the chemical resistance of the polymer composition and lower the water absorbance. Since the amide bond is vulnerable to hydrolysis, durability and mechanical properties of the polymer composition and the injection product including the same may be improved by lowering the hygroscopicity of the polyamide. In some embodiments, the polymer composition may include 1 to 20% by weight of modified polyamide. In the case that the content of the modified polyamide is less than the above range, the effect of improving chemical resistance and reducing hygroscopicity according to the inclusion of the modified polyamide may not appear. The modified polyamide included in the polymer composition may be crystalline, semi-crystalline, or amorphous. In another embodiment, the polymer composition may include 5 to 15% by weight or 5 to 10% by weight of modified polyamide. In the case that the above range is satisfied, mechanical properties (e.g., the tensile strength, the impact strength) of a molded article prepared from a recycled polyamide resin composition including the same may be further improved.

A glycidyl group-modified ethylene-octene-based copolymer (EOR-GMA) may be, for example, the grafted glycidyl group by bonding glycidyl methacrylate (GMA) to a polyethylene octene copolymer (poly (ethylene octene)). For example, the glycidyl group-modified ethylene-octene-based copolymer may have a structure as shown in Formula 5 below.

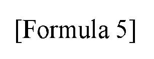

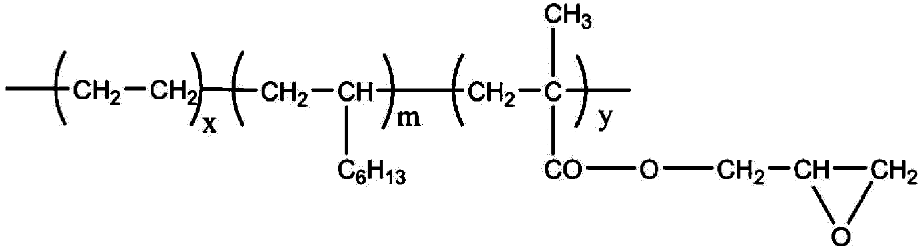

In Formula 5, m, x, and y are arbitrary integers. In some embodiments, the glycidyl methacrylate content of the glycidyl group-modified ethylene-octene-based copolymer may be 2 to 20% by weight, specifically 8 to 10% by weight, but it is not necessarily limited thereto. In another embodiment, the glycidyl group-modified ethylene-octene-based copolymer may have an average molecular weight of 50,000 to 350,000 g/mol, specifically 100,000 to 300,000 g/mol, more specifically 150,000 to 250,000 g /mol. In the case that the average molecular weight of the glycidyl group-modified ethylene-octene-based copolymer satisfies the above numerical range, mechanical properties of the polymer composition including the same may be improved.

The glycidyl group-modified ethylene-octene copolymer may increase the melt viscosity and melt tension of the polymer composition including the recycled polyamide, and it may improve thermal stability and appearance. The glycidyl group grafted to the glycidyl group-modified ethylene-octene-based copolymer may extend the polyamide chain by, for example, a ring-opening reaction as shown in Formula 6 below.

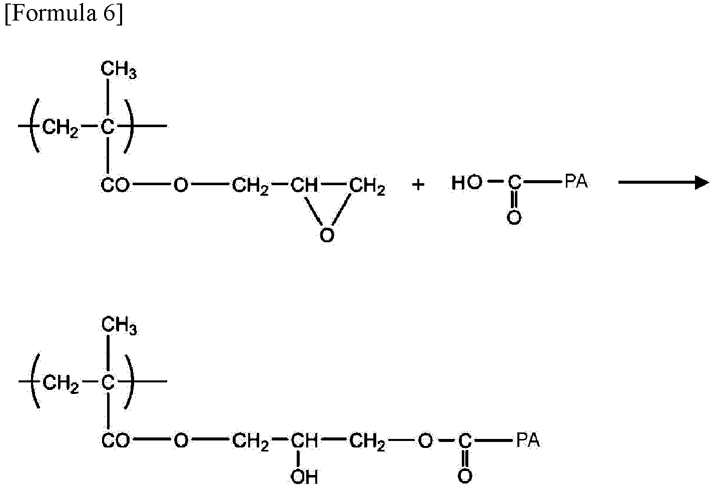

In Formula 6, PA means a polyamide chain. In Formula 6, the ethylene-octene chain of the glycidyl group-modified ethylene-octene copolymer is omitted for clarity.

The recycled polyamide may undergo degradation in which polymer chains break and shorten because of various external adverse effects, such as exposure to heat during injection molding, exposure to sunlight during use and after disposal, and/or hydrolysis by exposure to moisture. Because of the above-described deterioration, there may be gas generation from the recycled polyamide included in the polymer composition during injection molding due to a decrease in thermal stability, injection molding burr due to a decrease in melt viscosity and melt tension due to shortening of the polymer chain, a decrease in tensile strength and impact strength due to shortening of the polymer chain, and an increase in hygroscopicity. The glycidyl group-modified ethylene-octene copolymer may act as a chain extender for the deteriorated polymer chain of the recycled polyamide. Therefore, the polymer composition containing the glycidyl group-modified ethylene-octene copolymer may reduce the risk of deterioration of mechanical properties and quality because of the use of recycled polyamide through the reduction of the gas generation defect during injection by the improvement of thermal stability, reduction of the injection molding burr by increasing the melt viscosity and melt tension, increase of the tensile strength and impact strength, and reduction of the hygroscopicity.

In some embodiments, the polymer composition of the present disclosure may include 0.1 to 10% by weight of a glycidyl group-modified ethylene-octene-based copolymer. Within the above range, melt viscosity and melt tension of the polymer composition may be optimally adjusted to provide optimal fluidity for extrusion molding of the polymer composition.

The inorganic filler may be included in the polymer composition to strengthen mechanically the polymer composition and control the density. In some embodiments, the inorganic filler may include a fibrous or needle-like inorganic material such as, for example, glass fiber, carbon fiber, mineral wool, or alastonite. In another embodiment, the inorganic filler may include a granular or plate-like solid inorganic material such as talc, clay, kaolin, mica, and calcium carbonate.

In some embodiments, the particle shape of the inorganic filler may have a ratio of a minor axis to a major axis of 1: 1 to 1:10, specifically 1:2 to 1:8. In some embodiments, the length of the inorganic filler may be 1 to 5 mm, specifically 2 to 4 mm. In the case that the length of the inorganic filler is smaller than the above range, the strengthening effect of the polymer by the inorganic filler is reduced. In addition, in the case that the length of the inorganic filler exceeds the above range, impregnation of the polyamide and the inorganic filler may be incomplete, or the possibility that the inorganic filler may be aggregated in some areas of the injection-molded product may increase because of entanglement between the inorganic fillers.

In some embodiments, the polymer composition may include 30 to 70% by weight of inorganic filler. In the case that the content of the inorganic filler is within the above range, mechanical properties of the polymer composition may be improved.

In some embodiments, the polymer composition of the present disclosure, in addition to the above-described components, may further include additives, if necessary, in a range that does not impair the effects of the present disclosure. The additives may include, but are not limited to, an antioxidant, a lubricant, a heat stabilizer, a flame retardant, a weathering stabilizer, an antistatic agent, a release agent, a colorant, and/or a mixture thereof. In this case, the additive may be included in an amount of 0.1 to 20% by weight, specifically 0.5 to 10% by weight.

In particular, the type of the antioxidant is not particularly limited, but it may include a phenolic antioxidant. As an example, a hindered phenol antioxidant may be mentioned, and a commercialized example may include Irganox 1010, Irganox 1098, and Irganox 245, but it is not necessarily limited thereto. In addition, the lubricant is used without limitation as long as it is commonly used, and, for example, polyethylene wax may be used. In addition, the heat stabilizer may be used without limitation as long as it is commonly used, and, for example, trimethyl phosphite, triethyl phosphite, tris(nonylphenyl) phosphite, trimethyl phosphate, and tris(2,4-di-tert-butylphenyl) phosphite may be mentioned, but it is not necessarily limited thereto.

In order to test the effects of polymer compositions according to various embodiments of the present disclosure, polymer compositions of various embodiments including recycled polyamide were manufactured, and properties and quality were compared with those of comparative examples. Specific configurations of the embodiments and the comparative examples are described in Table 1. The polymer compositions of the embodiments and the comparative examples were prepared by mixing the components of Table 1 below with a mixer to manufacture pellets, and the specimens were manufactured through injection molding of the pellets.

**[Table 1]**

| Division | Recycled polyamide | New polyamide | | | | EOR-GMA | Glass fiber |
|---|---|---|---|---|---|---|---|
| | | PA6 | PA6I/6T | PA6I | MXD6 | | |
| Example 1 | 30 | 7 | 12 | - | - | 1 | 50 |
| Example 2 | 20 | 13 | 14 | - | - | 3 | 50 |
| Example 3 | 25 | 15 | 7 | - | - | 3 | 50 |
| Example 4 | 20 | 11 | 8 | - | - | 1 | 60 |
| Example 5 | 20 | 3 | 6 | - | - | 1 | 70 |
| Example 6 | 30 | 7 | - | 12 | - | 1 | 50 |
| Example 7 | 20 | 13 | - | - | 14 | 3 | 50 |
| Comparativ e Example 1 | 50 | - | - | - | - | - | 50 |
| Comparativ e Example 2 | - | 50 | - | - | - | - | 50 |
| Comparativ e Example 3 | 30 | 20 | - | - | - | - | 50 |
| Comparativ e Example 4 | 30 | 17 | 3 | - | - | - | 50 |
| Comparativ e Example 5 | 20 | 20 | - | - | - | - | 60 |

In Table 1, EOR-GMA represents a glycidyl group-modified ethylene-octene-based copolymer. PA6I/6T, PA6I, and MXD6 are modified polyamides containing a benzene ring. In addition, the unit of the indicated content is % by weight. The recycled polyamide used material collected from marine waste. With reference to Table 1, various examples of the resin composition of the present disclosure contain 20 to 30% by weight of recycled polyamide, 1 to 3% by weight of a glycidyl group-modified ethylene-octene-based copolymer, and 50 to 70% of glass fiber as an inorganic filler. In contrast, the resin compositions of comparative examples were prepared by mixing recycled polyamide, new polyamide, or a mixture thereof with glass fiber. Table 2 shows the results of measuring the physical properties and quality of polymer compositions according to various embodiments of the present disclosure and comparative examples prepared with the above configuration.

**[Table 2]**

| Division | Tensile strength | Impact strength | Hygroscopici ty | Thermal stability | Exterior |
|---|---|---|---|---|---|
| Unit | kgf/cm ² | kgf·cm/cm | weight% | weight% | - |
| Example 1 | 2350 | 14.7 | 0.72 | 2.1 | 5 |
| Example 2 | 2380 | 15.8 | 0.68 | 2.3 | 5 |
| Example 3 | 2450 | 15.5 | 0.92 | 2.5 | 4.5 |
| Example 4 | 2820 | 14.2 | 0.87 | 2.1 | 4.5 |
| Example 5 | 3150 | 14.5 | 0.85 | 2.5 | 4 |
| Example 6 | 2330 | 14.6 | 0.69 | 2.0 | 5 |
| Example 7 | 2410 | 16.2 | 0.72 | 2.2 | 5 |
| Comparative Example 1 | 1920 | 10.5 | 1.9 | 3.2 | 3 |
| Comparative Example 2 | 2310 | 12.8 | 1.8 | 3.0 | 3 |
| Comparative Example 3 | 2230 | 11.2 | 1.8 | 3.1 | 3 |
| Comparative Example 4 | 2280 | 12.1 | 1.5 | 3.0 | 4 |
| Comparative Example 5 | 2295 | 12.5 | 1.4 | 2.9 | 3 |

In Table 2, the tensile strength was measured using a tensile tester for dumbbell-type specimen in accordance with KS M ISO 527. The impact strength was measured by making a notch in a 1/8" thick specimen in accordance with ASTM D256 and measuring the notched Izod impact strength. For hygroscopicity, the specimen was dried in an oven at 50°C for 24 hours and weighed, after which the test specimen was immersed in water at 23°C for 24 hours, then removed, wiped with a cloth, and immediately weighed. The thermal stability was measured by the weight loss through a thermogravimetric analyzer with the temperature maintained at 320°C for 30 minutes. For appearance, specimens were injected under the conditions of processing temperature of 280°C and mold temperature of 100°C, and defects were identified with the naked eye and evaluated in 5 stages of 1 (very poor) to 5 (very good). With reference to Table 2, it can be seen that various embodiments of the present disclosure have a tensile strength of 2300 or more to a maximum of 3150 kgf/cm², and an impact strength of 14 or more to a maximum of 16.2 kgf cm/cm. In contrast, Comparative Example 1 using only recycled polyamide recovered from marine waste showed significantly lower tensile strength and impact strength compared with the present disclosure, and it can also be seen that that, in Comparative Example 3 to Comparative Example 5 prepared by mixing recycled polyamide and new polyamide, the tensile strength and impact strength are somewhat lower than those of the present disclosure. It can be seen that Comparative Example 2 prepared as a control that does not contain the recycled polyamide has relatively high tensile strength and impact strength; therefore, the low physical properties of Comparative Examples 1 and 3 to 5 are because of the inclusion of the recycled polyamide. Accordingly, it can be seen that the polymer composition of the present disclosure may solve the problem of deterioration of physical properties that occurs during recycling of recycled polyamide collected from plastic waste such as marine waste.

In addition, with reference to Table 2, it can be seen that various embodiments of the present disclosure are superior in hygroscopicity (0.72 to 0.92% by weight), thermal stability (2.0 to 2.5% by weight), and appearance (good to very good) compared with the comparative examples. This may be because hygroscopicity and thermal stability were improved by various modified polyamides and glycidyl group-modified ethylene-octene-based copolymers (EOR-GMA) included in embodiments of the present disclosure, so that the gas generation during injection was reduced and melt viscosity and the melt tension were properly adjusted.

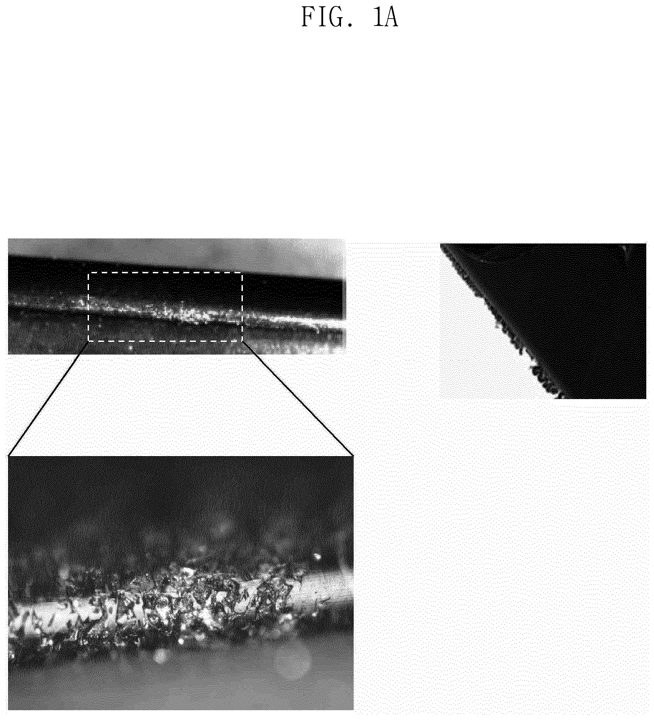

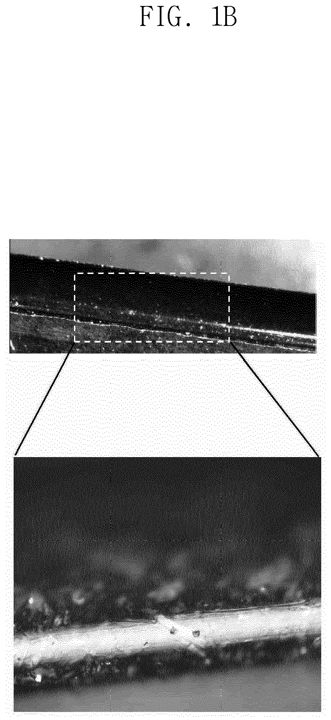

FIGS. 1a and 1b are views comparing the appearance of products manufactured by injecting a polymer composition according to an embodiment of the present disclosure and a polymer composition according to a comparative example including recycled polyamide, respectively.

With reference to FIG. 1b, it can be seen that, in the polymer composition according to the comparative example, gas was generated during injection and the appearance shows scratches and charring marks generated because of the entrainment of gas, and burring was caused by resin leakage into the molding parting line because of excessive melt viscosity of the resin or insufficient melt tension.

In contrast, with reference to FIG. 1a, it can be seen that the polymer composition of the present disclosure maintained an optimal state of melt viscosity and melt tension, and improved thermal stability, so that surface defects because of gas generation did not appear. Therefore, it can be seen that, while recycling recycled polyamide such as marine waste, this may help to expand the recycling range of recycled polyamide by reducing the quality defects that occur during recycling and, ultimately, may help to recycle marine plastic waste.

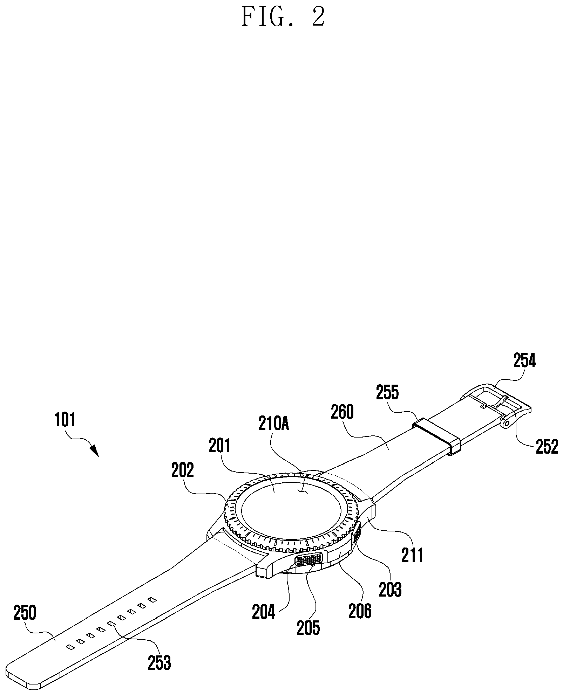

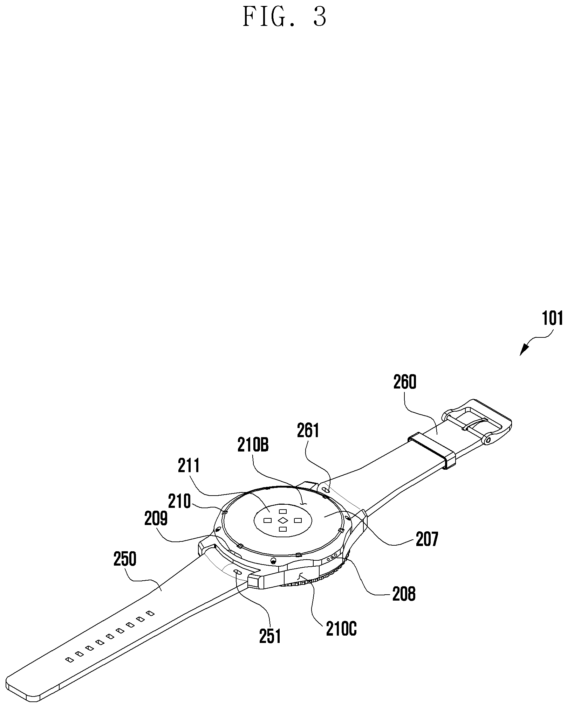

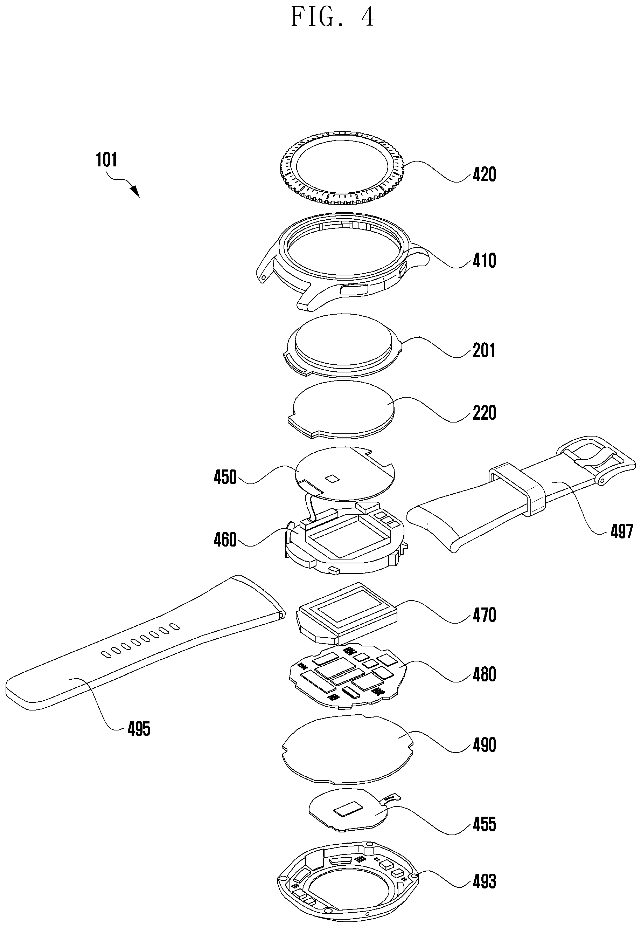

FIG. 2 is a perspective view of a front surface of an electronic device according to some embodiments of the present disclosure. FIG. 3 is a perspective view of a rear surface of the electronic device of FIG. 2. FIG. 4 is an exploded perspective view of the electronic device of FIG. 2.

With reference to FIGS. 2 and 3, an electronic device 101 according to some embodiments of the present disclosure may include a housing 210 including a first side (or front side) 210A, a second side (or rear side) 210B, and a side surface 210C surrounding a space between the first surface 210A and the second surface 210B; and it may include binding members 250 and 260 that are connected to at least a portion of the housing 210 and composed to allow the electronic device 101 to be detachably attached to a portion (e.g., wrist, ankle) of a user's body. The binding members 250 and 260 may be, for example, a strap wound around a user's wrist to fix the electronic device 101. In another embodiment (not shown), the housing may refer to a structure that forms part of the first surface 210A, the second surface 210B, and the side surface 210C of FIG. 2. According to an embodiment, the first surface 210A may be formed by the front plate 201 (e.g., a glass plate including various coating layers or a polymer plate) at least a portion of which is substantially transparent. The second surface 210B may be formed by a substantially opaque back plate 207. The back plate 207 may be formed by, for example, coated or tinted glass, ceramic, polymer, metal (e.g., aluminum, stainless steel (STS), or magnesium), or a combination of at least two of the foregoing. The side surface 210C is coupled to the front plate 201 and the rear plate 207 and may be formed by a side bezel structure (or "side member") 206 including a metal and/or a polymer. In some embodiments, the back plate 207 and the side bezel structure 206 are integrally formed and may include the same material (e.g., a metal material such as aluminum). The binding members 250 and 260 may be formed of various materials and shapes. A woven fabric, leather, rubber, synthetic resin, metal, ceramic, or a combination of at least two of the above materials may be used to form an integral and a plurality of unit links to be able to flow with each other.

According to an embodiment, the electronic device 101 may include at least one of a display 220 (refer to FIG. 3), audio modules 205 and 208, a sensor module 211, key input devices 202, 203 and 204, and a connector hole (209). In some embodiments, the electronic device 101 may omit at least one of the components (e.g., the key input devices 202, 203 and 204, the connector hole 209, or the sensor module 211) or may include other constitution elements additionally.

The display 220, for example, may be visually exposed through a substantial portion of the front plate 201. The shape of the display 220 may be a shape corresponding to the shape of the front plate 201, and it may have a circular shape, an oval shape, or a polygonal shape. The display 220 may be coupled to or disposed adjacent to a touch sensing circuit, a pressure sensor capable of measuring the intensity (pressure) of a touch, and/or a fingerprint sensor.

The audio modules 205 and 208 may include a microphone hole 205 and a speaker hole 208. In the microphone hole 205, a microphone for acquiring an external sound may be disposed therein; and, in some embodiments, a plurality of microphones may be disposed to detect the direction of the sound. The speaker hole 208 may be used as an external speaker and a receiver for calls. In some embodiments, the speaker holes 208 and 214 and the microphone hole 203 may be implemented as a single hole, or a speaker may be included without the speaker holes 208 and 214 (e.g., a piezo speaker).

The sensor module 211 may generate an electrical signal or data value corresponding to an internal operating state of the electronic device 101 or an external environmental state. The sensor module 211 may include, for example, a biometric sensor module 211 (e.g., an HRM sensor) disposed on the second surface 210B of the housing 210. The electronic device 101 may further include a sensor module not shown, for example, at least one of a gesture sensor, a gyro sensor, a barometric pressure sensor, a magnetic sensor, an acceleration sensor, a grip sensor, a color sensor, an IR (infrared) sensor, a biometric sensor, a temperature sensor, a humidity sensor, or an illuminance sensor.

The key input devices 202, 203, and 204 may include a wheel key 202 disposed on a first surface 210A of the housing 210 and rotatable in at least one direction, and/or side key buttons 203 and 204 disposed on a side surface 210C of the housing 210. The wheel key may have a shape corresponding to the shape of the front plate 201. In another embodiment, the electronic device 101 may not include some or all of the above-mentioned key input devices 202, 203, and 204 and the non-included key input devices 202, 203, and 204 may be implemented in the form of a soft key or a touch key on the display 220. The connector hole 209 may accommodate a connector (e.g., a USB connector) for transmitting and receiving power and/or data to and from an external electronic device, and it may include another connector hole (not shown) capable of accommodating a connector for transmitting and receiving audio signals to and from an external electronic device. The electronic device 101 may further include, for example, a connector cover (not shown) that covers at least a portion of the connector hole 209 and blocks the inflow of foreign substances into the connector hole.

The binding members 250 and 260 may be detachably attached to at least a partial area of the housing 210 using the locking members 251 and 261. The binding members 250 and 260 may include one or more of the fixing member 252, the fixing member fastening hole 253, the band guide member 254, and the band fixing ring 255.

The fixing member 252 may be composed to fix the housing 210 and the binding members 250 and 260 to a part of the user's body (e.g., a wrist or an ankle). The fixing member fastening hole 253 may fix the housing 210 and the binding members 250 and 260 to a part of the user's body corresponding to the fixing member 252. The band guide member 254 is composed to limit the range of movement of the fixing member 252 in the case that the fixing member 252 is fastened with the fixing member fastening hole 253, so that the binding members 250 and 260 may be made to adhere and bind to a part of the user's body. The band fixing ring 255 may limit the range of movement of the binding members 250 and 260 in a state in which the fixing member 252 and the fixing member fastening hole 253 are fastened.

With reference to FIG. 4, the electronic device 101 may include a side bezel structure 410, a wheel key 420, a front plate 201, a display 220, a first antenna 450, a second antenna 455, a support member 460 (e.g., a bracket), a battery 470, a printed circuit board 480, a sealing member 490, a rear plate 493, and binding members 495 and 497. The support member 460 may be disposed inside the electronic device 101 and connected to the side bezel structure 410, or it may be integrally formed with the side bezel structure 410. The support member 460 may include, for example, the polymer composition of the present disclosure including a metallic material and/or a non-metallic material such as a recycled polyamide, a new polyamide, a glycidyl group-modified ethylene-octene copolymer (EOR-GMA), and an inorganic filler as described above. The support member 460 may have a display 220 coupled to one surface and a printed circuit board 480 coupled to the other surface. The printed circuit board 480 may be equipped with a processor, memory, and/or interfaces. The processor may include, for example, one or more of a central processing unit, an application processor, a graphic processing unit (GPU), an application processor, a sensor processor, or a communication processor.

The memory may include, for example, volatile memory or non-volatile memory. The interface may include, for example, a high definition multimedia interface (HDMI), a universal serial bus (USB) interface, an SD card interface, and/or an audio interface. The interface may, for example, connect electrically or physically the electronic device 101 to an external electronic device, and it may include a USB connector, an SD card/MMC connector, or an audio connector.

The battery 470 is a device for supplying power to at least one component of the electronic device 101 and may include, for example, a non-rechargeable primary cell, a rechargeable secondary cell, or a fuel cell. At least a portion of the battery 470 may, for example, be disposed substantially coplanar with the printed circuit board 480. The battery 470 may be integrally disposed inside the electronic device 101, or it may be disposed detachably from the electronic device 101.

The first antenna 450 may be disposed between the display 220 and the support member 460. The first antenna 450 may include, for example, a near field communication (NFC) antenna, a wireless charging antenna, and/or a magnetic secure transmission (MST) antenna. The first antenna 450 may, for example, perform short-range communication with an external device or wirelessly transmit/receive power required for charging, and it may transmit a magnetic-based signal including a short-range communication signal or payment data. In another embodiment, an antenna structure may be formed by a part of the side bezel structure 410 and/or the support member 460 or a combination thereof.

The second antenna 455 may be disposed between the circuit board 480 and the back plate 493. The second antenna 455 may include, for example, a near field communication (NFC) antenna, a wireless charging antenna, and/or a magnetic secure transmission (MST) antenna. The second antenna 455 may, for example, perform short-range communication with an external device or wirelessly transmit/receive power required for charging, and it may transmit a magnetic-based signal including a short-range communication signal or payment data. In another embodiment, an antenna structure may be formed by a part of the side bezel structure 410 and/or the rear plate 493 or a combination thereof.

The sealing member 490 may be disposed between the side bezel structure 410 and the rear plate 493. The sealing member 490 may be composed to block moisture and foreign substances from flowing from the outside into a space surrounded by the side bezel structure 410 and the rear plate 493.

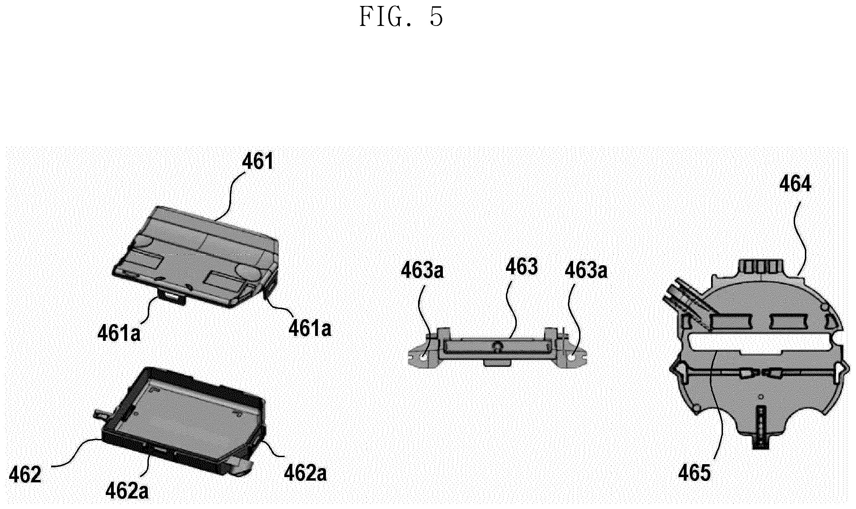

FIG. 5 is a perspective view and a plane view illustrating various embodiments of the support member 460 of the electronic device 101.

With reference to FIG. 5, the support member 460 may include an upper support member 461 and a lower support member 462. The upper support member 461 and the lower support member 462 may fix and protect the internal components of the electronic device 101 (e.g., the printed circuit board 480, the battery 470, the first antenna 450, and/or the second antenna 455) from the top and bottom. A fastening groove 461a is formed in any one of the upper support member 461 and the lower support member 462, and a fastening protrusion 462a is formed in the other, so that the upper support member 461 and the lower support member 462 may be coupled to each other in a manner such as, for example, an interference fit or a snap fit.

With reference back to FIG. 5, the support member 460 may include a reinforcing member 463. The beam may be such as a beam that provides additional rigidity to the housing (e.g., side bezel structure 410) and internal components of the electronic device 101. A fastening hole 463a for coupling to other areas of the support member 460 or a housing (e.g., the side bezel structure 410) may be formed at an end of the reinforcing member 463.

With reference back to FIG. 5, the support member 460 may include a bracket 464. The bracket 464 may be the member that is seated inside the housing (e.g., the side bezel structure 410) and is coupled with the internal components of the electronic device 101 (e.g., the display 220, the printed circuit board 480, the battery 470, the first antenna 450, and/or the second antenna 455 may be included).

In some embodiments, the bracket 464 may include at least one or more lighting holes 464a. The lightning hole 464a may pass through at least a portion of the support member 460, and it may be a through hole formed to improve rigidity of the bracket 464 or to reduce the weight of the bracket 464.

As described above, the upper support member 461, the lower support member 462, the reinforcing member 463, and the bracket 464 may include the polymer compositions of the present disclosure including a recycled polyamide, a new polyamide, a glycidyl group-modified ethylene-octene copolymer (EOR-GMA), and an inorganic filler. Accordingly, plastic waste, particularly marine waste, may be recycled in the case that the electronic device 101 is manufactured, and mechanical properties, moldability, and appearance quality of the support member 460 manufactured through recycling may be improved.

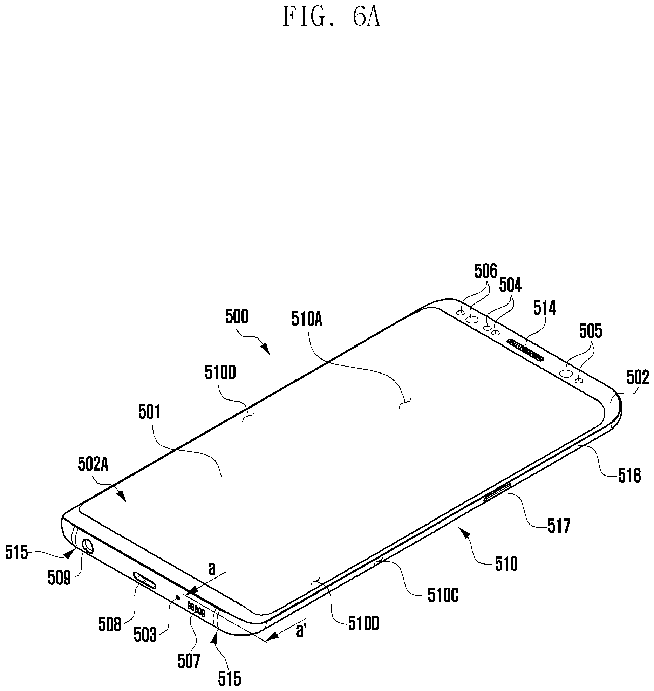

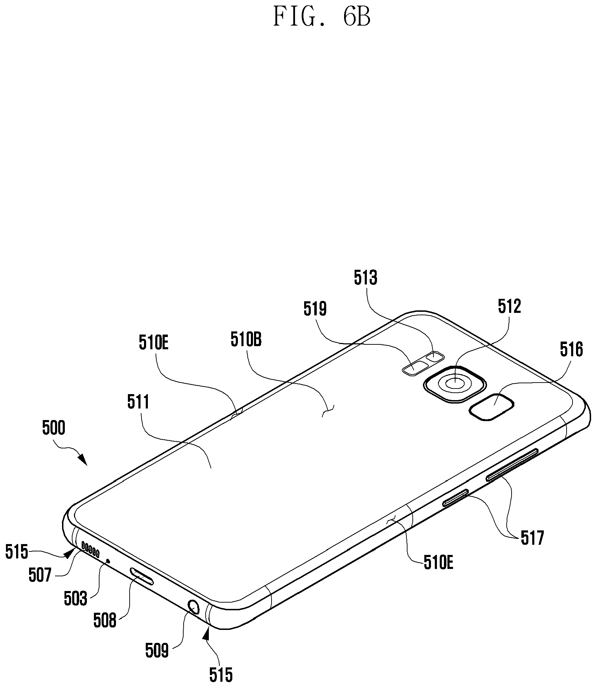

FIG. 6a is a perspective view of a front surface of an electronic device according to various embodiments of the present disclosure. FIG. 6b is a perspective view of a rear surface of an electronic device according to various embodiments of the present disclosure;

With reference to FIGS. 6a and 6b, an electronic device 500 according to an embodiment may include the housing 510 that includes a first surface (or front) 510A, a second surface (or rear) 510B, and a side surface 510C surrounding the space between the first surface 510A and the second surfaces 510B. In another embodiment, the housing may refer to a structure forming at least a portion of the second surface 510B and the side surface 510C of FIG. 6a and that has an opening 502A that is at least partially open with respect to the direction of the first surface 510A. According to an embodiment, the first surface 510A may be formed by a front plate 502 (e.g., a glass plate including various coating layers, or a polymer plate) at least part of which is substantially transparent. The second surface 510B may be formed by a substantially opaque back surface plate 511. The rear surface plate 511 may be formed by, for example, coated or colored glass, ceramic, polymer, metal (e.g., aluminum, stainless steel (STS), or magnesium), or a combination of at least two of the above materials. The side surface 510C may be coupled to the front plate 502 and the rear surface plate 511 and may be formed by a side bezel structure (or "side member") 518 including a metal and/or a polymer. In some embodiments, the rear surface plate 511 and the side bezel structure 518 are integrally formed and may include the same material (e.g., a metal material such as aluminum).

In the illustrated embodiment, the front plate 502 may include two first areas 510D that extend seamlessly by bending from the first surface 510A toward the rear surface plate 511 at both ends of the long edge of the front plate 502. In the illustrated embodiment (with reference to FIG. 6b), the rear surface plate 511 may include two second areas 510E that extend seamlessly by bending from the second surface 510B toward the front plate 502 at both ends of the long edge. In some embodiments, the front plate 502 (or the rear surface plate 511) may include only one of the first areas 510D (or the second areas 510E). In another embodiment, some of the first areas 510D or the second areas 510E may not be included. In the above embodiments, when viewed from the side of the electronic device 500, the side bezel structure 518 may have a first thickness (or width) on the side surface that does not include the first areas 510D or the second areas 510E as described above, and it may have a second thickness that is thinner than the first thickness on the side surface that includes the first areas 510D or the second areas 510E.

According to an embodiment, the electronic device 500 may include at least one of a display 501, an audio module 503, 507 and 514, a sensor module 504, 516 and 519, a camera module 505, 512 and 513, a key input device 517, a light emitting element 506, and connector holes 508 and 509. In some embodiments, the electronic device 500 may omit at least one of the components (e.g., the key input device 517 or the light emitting device 506) or additionally include other components.

The display 501, for example, may be exposed through a substantial portion of the front plate 502. In some embodiments, at least a portion of the display 501 may be exposed through the front plate 502 forming the first areas 510D of the first surface 510A and the side surface 510C. In some embodiments, the edge of the display 501 may be formed to be substantially the same as an adjacent outer shape of the front surface plate 502. In another embodiment (not shown), in order to expand the area to which the display 501 is exposed, the distance between the outer edge of the display 501 and the outer edge of the front surface plate 502 may be substantially the same.

In another embodiment (not shown), a recess or an opening may be formed in a part of the screen display area of the display 501, and at least one of an audio module 514, a sensor module 504, a camera module 505, and a light emitting device 506 that is aligned with the recess or opening may be included. In another embodiment (not shown), on the rear surface of the screen display area of the display 501, at least one of an audio module 514, a sensor module 504, a camera module 505, a fingerprint sensor 516, and a light emitting element 506 may be included. In another embodiment (not shown), the display 501 may be disposed coupled to or adjacent to a touch sensing circuit, a pressure sensor capable of measuring the intensity (pressure) of a touch, and/or a digitizer that detects a magnetic field type stylus pen. In some embodiments, at least a portion of the sensor module 504 and 519 and/or at least a portion of a key input device 517 may be disposed in the first areas 510D and/or the second areas 510E.

The audio modules 503, 507, and 514 may include a microphone hole 503 and speaker holes 507 and 514. In the microphone hole 503, a microphone for acquiring an external sound may be disposed therein; and, in some embodiments, a plurality of microphones may be disposed to sense the direction of the sound. The speaker holes 507 and 514 may include an external speaker hole 507 and a receiver hole 514 for a call. In some embodiments, the speaker holes 507 and 514 and the microphone hole 503 may be implemented as a single hole, or a speaker may be included without the speaker holes 507 and 514 (e.g., a piezo speaker).

The sensor modules 504, 516, and 519 may generate electrical signals or data values corresponding to an internal operating state of the electronic device 500 or an external environmental state. The sensor modules 504, 516, and 519 may include, for example, a first sensor module 504 (e.g., a proximity sensor), a second sensor module (not shown) (e.g., a fingerprint sensor), a third sensor module 519 (e.g., HRM sensor) disposed on the second side 510B of the housing 510, and/or a fourth sensor module 516 (e.g., fingerprint sensor). The fingerprint sensor may be disposed on the second surface 510B of the housing 510 as well as the first surface 510A (e.g., the display 501). The electronic device 500 may further include a sensor module not shown, such as, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor 504.

The camera modules 505, 512, and 513 may include a first camera device 505 disposed on the first surface 510A of the electronic device 500, a second camera device 512 disposed on the second surface 510B of the electronic device 500, and/or a flash 513. The camera devices 505 and 512 may include one or more lenses, an image sensor, and/or an image signal processor. The flash 513 may include, for example, a light emitting diode or a xenon lamp. In some embodiments, two or more lenses (infrared cameras, wide angle and telephoto lenses) and image sensors may be disposed on one side of the electronic device 500.

The key input device 517 may be disposed on the side surface 510C of the housing 510. In other embodiments, the electronic device 500 may not include some or all of the above-mentioned key input devices 517 and the key input devices 517 not included may be implemented on the display 501 in different form such as soft keys, etc. In some embodiments, the key input device may include a sensor module 516 disposed on the second side 510B of the housing 510.

The light emitting element 506 may be disposed, for example, on the first surface 510A of the housing 510. The light emitting device 506 may provide, for example, state information of the electronic device 500 in the form of light. In another embodiment, the light emitting device 506 may provide, for example, a light source that is interlocked with the operation of the camera module 505. The light emitting element 506 may include, for example, an LED, an IR LED, and a xenon lamp.

The connector holes 508 and 509 may include a first connector hole 508 capable of accommodating a connector (e.g., the USB connector) for transmitting and receiving power and/or data to and from an external electronic device and/or a second connector hole (e.g., the earphone jack) 509 capable of accommodating a connector for transmitting and receiving audio signals to and from an external electronic device.

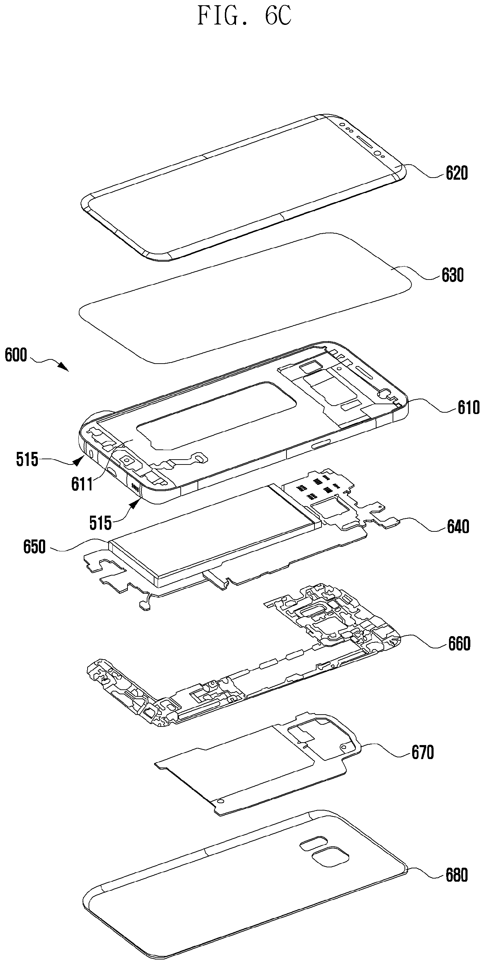

FIG. 6C is an exploded perspective view of an electronic device according to various embodiments of the present disclosure.

With reference to FIG. 6C, the electronic device 600 may include a side bezel structure 610 (e.g., the housing), a first support member 611 (e.g., the bracket), a front plate 620, a display 630, a printed circuit board 640, a battery 650, a second support member 660 (e.g., the rear case), an antenna 670, and a rear plate 680. In some embodiments, the electronic device 600 may omit at least one of the components (e.g., the first support member 611 or the second support member 660) or additionally include other components. At least one of the components of the electronic device 600 may be the same as or similar to at least one of the components of the electronic device 500 of FIG. 6a or 6b, and overlapping descriptions will be omitted below.

The first support member 611 may be disposed inside the electronic device 600 and connected to the side bezel structure 610 (e.g., the housing), or it may be integrally formed with the side bezel structure 610. The first support member 611 may include, for example, the polymer composition of the present disclosure including a metal material and/or a non-metal such as a recycled polyamide, a new polyamide, a glycidyl group-modified ethylene-octene copolymer (EOR-GMA), and an inorganic filler as described above. The first support member 611 may support, for example, the display 630 and/or print circuit board 640 against the side bezel structure (e.g., the housing) 610 with one side coupled to the display 630 and the other side coupled to the printed circuit board 640. The printed circuit board 640 may be equipped with a processor, memory, and/or interfaces. The processor may include, for example, one or more of a central processing unit, an application processor, a graphics processing unit, an image signal processor, a sensor hub processor, or a communication processor.

The second support member 660 may be a member to prevent collisions and electrical short circuits among the housing 610, the printed circuit board 640, and the battery 650 while supporting and fixing the printed circuit board 640 and the battery 650 in the housing 610 of the electronic device. The second support member 660 may include a non-conductive material, for example, the polymer composition according to various embodiments of the present disclosure described above.

The memory may include, for example, volatile memory or non-volatile memory.

The interface may include, for example, a high definition multimedia interface (HDMI), a universal serial bus (USB) interface, an SD card interface, and/or an audio interface. The interface may, for example, connect electrically or physically the electronic device 600 to an external electronic device, and it may include a USB connector, an SD card/MMC connector, or an audio connector.

The battery 650 may include a device for supplying power to at least one component of the electronic device 600 and may include, for example, a non-rechargeable primary battery, a rechargeable secondary battery, or a fuel cell. At least a portion of the battery 650 may be disposed substantially coplanar with the printed circuit board 640, for example. The battery 650 may be integrally disposed inside the electronic device 600 or may be disposed detachably from the electronic device 600.

The antenna 670 may be disposed between the rear surface plate 680 and the battery 650. The antenna 670 may include, for example, a near field communication (NFC) antenna, a wireless charging antenna, and/or a magnetic secure transmission (MST) antenna. The antenna 670 may, for example, perform short-range communication with an external device or wirelessly transmit/receive power required for charging. In another embodiment, an antenna structure may be formed by a part of the side bezel structure 610 and/or the first support member 611 or a combination thereof.

With reference to FIG. 6a to 6c, the housings 510 and 610 of the electronic device may be separated using at least one insulating area 515 to be used as a plurality of antenna radiators. The insulating area may be formed by, for example, impregnating the polymer composition of the present disclosure including a recycled polyamide, a new polyamide, a glycidyl group-modified ethylene-octene copolymer (EOR-GMA), and an inorganic filler into a metal material as described above.

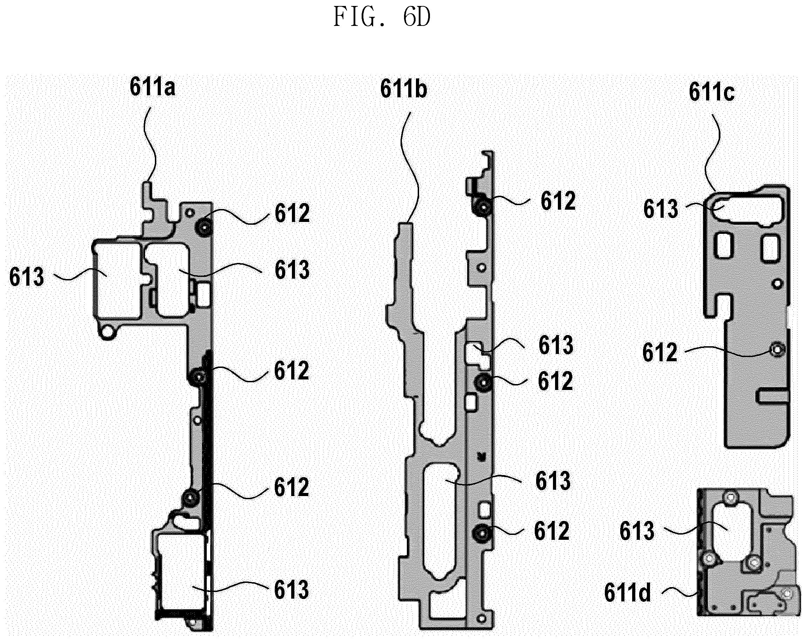

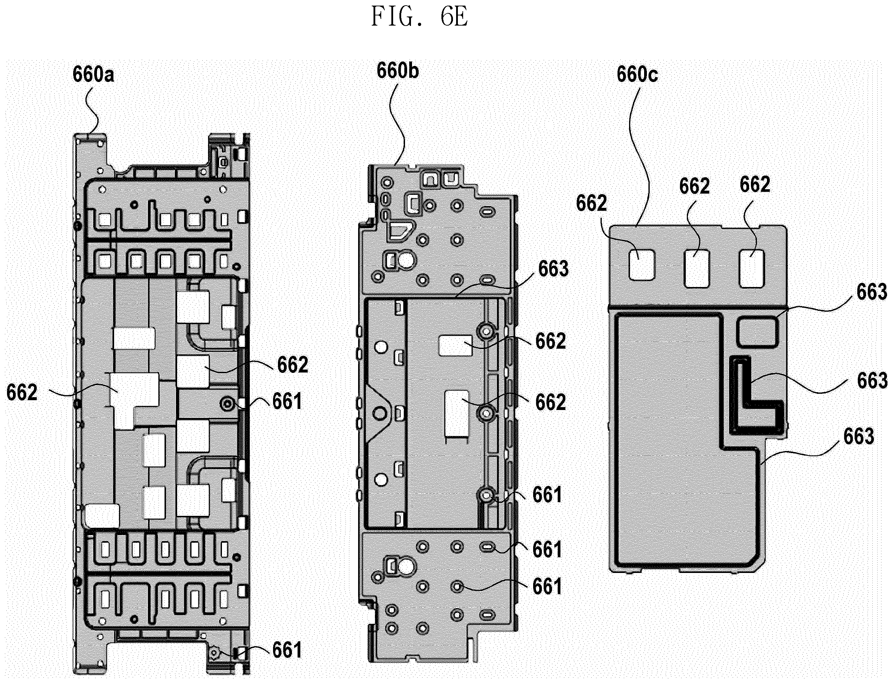

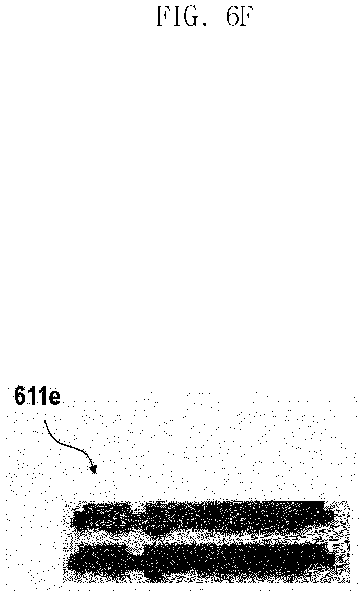

FIG. 6d is a plane view illustrating first support members according to various embodiments of the present disclosure. FIG. 6e is a plane view illustrating second support members according to various embodiments of the present disclosure. FIG. 6f is a view illustrating a key bracket according to various embodiments of the present disclosure.

With reference to FIG. 6d, the first support member 611 may include at least one bracket 611a, 611b, 611c, and 611d. The brackets 611a, 611b, 611c, and 611d may be a member composed to fix the components (e.g., the display 630, the printed circuit board 640, and the battery 650) of the electronic devices 500 and 600 to the housings 510 and 610. The brackets 611a, 611b, 611c, and 611d may include at least one fastening hole 612 for fixing to the housings 510 and 610. In some embodiments, the brackets 611a, 611b, 611c, and 611d may include at least one lightning hole 613 that improves rigidity and lightens the weight of the brackets 611a, 611b, 611c, and 611d and is formed so that a component of the electronic device 101 may be disposed.

With reference to FIG. 6e, the second support member 660 may include at least one support plate 660a, 660b, and 660c. The support plates 660a, 660b, and 660c may be members for fixing the components of the electronic devices 500 and 600 (e.g., the display 630, the printed circuit board 640, and the battery 650) to the housings 510 and 610. In some embodiments, the support plates 660a and 660b may include at least one fastening hole 661 for fixing to the housings 510 and 610. In some embodiments, the support plates 660a, 660b, and 660c may include a lighting hole 662 penetrating through the support plates 660a, 660b, and 660c in the thickness direction and/or a recess 663 formed by partial recessing of the partial area of the support plate 660a, 660b, and 660c, in order to improve rigidity, reduce weight, and secure space for disposal of the electronic device.

With reference to FIG. 6f, the electronic devices 500 and 600 may include a key bracket 611e. The key bracket 611e may be a member for supporting a key (e.g., the key input device 517) inside the housing 510 of the electronic devices 500 and 600.

The brackets 611a, 611b, 611c, and 611d, the key bracket 611d, and the support plates 660a, 660b, and 660c may include the polymer composition including the above-described recycled polyamide, new polyamide, glycidyl group-modified ethylene-octene copolymer (EOR-GMA), and inorganic filler. Accordingly, plastic waste, particularly marine waste, may be recycled when manufacturing the electronic devices 500 and 600, and mechanical properties, moldability, and appearance quality of the support member 460 manufactured through recycling may be improved.

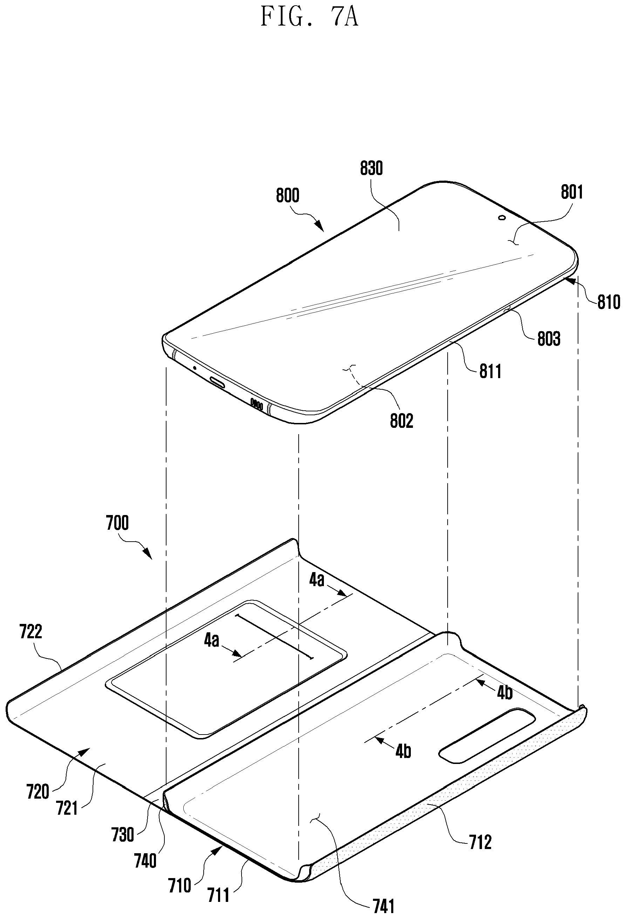

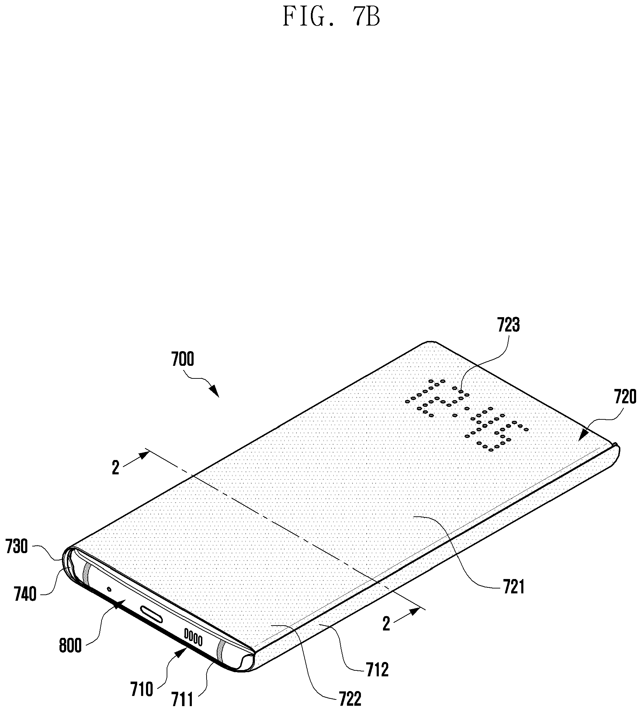

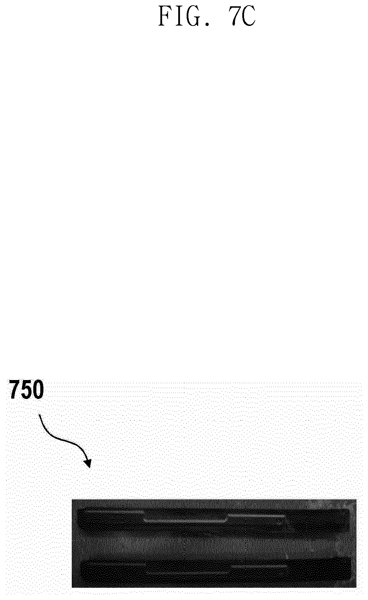

FIG. 7a is an exploded perspective view of a protective cover and an electronic device mounted thereon according to various embodiments of the present disclosure. FIG. 7b is a perspective view of a protective cover on which an electronic device is mounted according to various embodiments of the present disclosure. FIG. 7c is a view illustrating a stylus pen cover according to some embodiments of the present disclosure.

With reference to FIG. 7a and 7b, the protective cover 700 (e.g., protective case) may include a first cover 710, a second cover 720, and a connection part 730 connecting the first cover 710 and the second cover 720 integrally. According to an embodiment, the first cover 710 and the second cover 720 may be formed to have substantially the same size. According to an embodiment, the first cover 710 may include a first plate portion 711 and a first side portion 712 extending in a vertical direction from at least a portion of an edge of the first plate portion 711. According to an embodiment, the first side portion 712 may be formed to have a shape corresponding to at least a portion of the side surface 803 of the electronic device 800. According to an embodiment, the second cover 720 may include a second plate portion 721 and a second side portion 722 extending in a vertical direction from at least a portion of an edge of the second plate portion 721. According to an embodiment, the second side portion 722 may also be formed in a shape corresponding to at least a portion of the side surface 803 of the electronic device 800. In some embodiments, the first side portion 712 and the second side portion 722 may be formed in a curved shape.

According to various embodiments, the protective cover 700 may include a cradle 740 attached to the first plate portion 711 of the first cover 710. According to an embodiment, the cradle 740 may include a mounting portion 741 that may accommodate at least a portion of the rear surface 802 and the side surface 803 of the electronic device 800. According to an embodiment, the cradle 740 may be formed of a polymer and/or a metal material. In some embodiments, the polymer material of cradle 740 may include recycled polyamide. For example, as described above, the polymer material of the cradle 740 may be a polymer composition of the present disclosure including a recycled polyamide, a new polyamide, a glycidyl group-modified ethylene-octene-based copolymer (EOR-GMA), and an inorganic filler. In another embodiment, the cradle 740 may be formed of at least one of a metal material, GFRP, CFRP, rubber, silicon, PC, PC-ABS, and PC-FG. According to an embodiment, the cradle 740 may be disposed on the mounting part 741 and include a cradle inner skin layer for protecting the electronic device 800. According to an embodiment, the cradle inner skin layer 780 may be formed of a fabric (e.g., felt).

According to various embodiments, the electronic device 800 may include a housing 810 (e.g., the housing structure) including a front surface 801 facing a specified direction, a rear surface 802 facing a direction opposite to the front surface 801, and a side member 811 including the side surface surrounding the space between the front surface 801 and the rear surface 802. According to an embodiment, the electronic device 800 may include a display 830 that is disposed to be visible from the outside through substantially the entire area of the front surface 801.

According to various embodiments, the first cover 710 of the protective cover 700 may accommodate at least a portion of the electronic device 800. According to an embodiment, the electronic device 800 may be fixed in such a way that it is mounted on the mounting part 741 of the cradle 740 disposed on the first plate part 711 of the first cover 710. For example, the electronic device 800 may be fixed to a protective cover 700 in that the rear surface 802 faces the mounting portion 741 of the cradle 740, and at least a portion of the side surface 803 is tightly fitted to the cradle 740. According to an embodiment, in the case that the electronic device 800 is used, a first state (the state of FIG. 7a) where the second cover 720 is opened from the first cover 710 may be maintained; and, in the case that the electronic device 800 is not used, or for portability, the second state (the state of FIG. 7b) to protect the display 830 where the second cover 720 is folded to overlap the first cover 710 may be maintained. In some embodiments, even in the case that the electronic device 800 is in the second state, at least some functions may be performed through the notification means 723 (e.g., the notification member) disposed on the second cover 720. For example, the notification means may provide a specific notification to the user through a control circuit including an LED indicator built in the interior of the second cover 720. According to an embodiment, the control circuit including the notification means 723 may be wirelessly and/or wiredly connected to the electronic device 800 to receive data and power.

According to some embodiments, the protective cover 700 may include a stylus pen cover 750 for accommodating and protecting a stylus pen (not shown). The stylus pen cover 750 may be located on the front surface, side surface, or rear surface of the protective cover, and it may be a member that accommodates the stylus pen when the stylus pen is not in use to prevent loss and protects the stylus pen from external impact. As described above, the stylus pen cover 750 may include the polymer composition of the present disclosure including a recycled polyamide, a new polyamide, a glycidyl group-modified ethylene-octene-based copolymer (EOR-GMA), and an inorganic filler. Accordingly, plastic waste, particularly marine waste, may be recycled when the electronic device 101 is manufactured, and mechanical properties, moldability, and appearance quality of the support member 460 manufactured through recycling may be improved.

The polymer composition according to various embodiments of the present disclosure may include a recycled polyamide, a new polyamide including at least one polyamide component, a glycidyl group-modified ethylene-octene-based copolymer, and an inorganic filler. In some embodiments, the recycled polyamide may be material collected from marine plastic waste.

In some embodiments, 10 to 30% by weight of the recycled polyamide, 1 to 50% by weight of the new polyamide, 0.1 to 10% by weight of the glycidyl group-modified ethylene-octene-based copolymer, and 30 to 70% by weight of the inorganic filler may be included.

In some embodiments, the new polyamide may include polyamide PA6 and a modified polyamide having a benzene ring. In some embodiments, the modified polyamide may include at least one of polyamide PA6I, a copolymer of polyamide PA6I and PA6T, and polyamide MXD6. In some embodiments, 1 to 30% by weight of the polyamide PA6 and 1 to 20% by weight of the modified polyamide may be included.

The electronic devices 101, 500, and 600 according to other embodiments of the present disclosure may include the displays 220, 501, and 630 disposed in a first direction; the housings 210, 510, and 610 including an internal space having an opening opened in the first direction; the substrate portion 480 and 640 disposed inside the housing; and the support member 460, 611, and 660 supporting the substrate portion 480 and 640 with respect to the housings 207, 510, and 610 and including a non-conductive material, wherein the support member 460, 611, and 660 may include a polymer composition including a recycled polyamide, a new polyamide including at least one polyamide component, a glycidyl group-modified ethylene-octene-based copolymer, and an inorganic filler. In some embodiments, the recycled polyamide may be material collected from marine plastic waste.

In some embodiments, the new polyamide may include polyamide PA6 and a modified polyamide having a benzene ring.

In some embodiments, the polymer composition may have a tensile strength of 2300 kgf/cm² or more. In some embodiments, the polymer composition may have a notched Izod impact strength of 14 kgf cm/cm or more. In some embodiments, the polymer composition may have a thermal stability with a weight loss of 2.5% or less when heated at 230°C for 30 minutes. In some embodiments, the polymer composition may have a moisture absorption of 1% by weight or less when immersed in water for 24 hours.

The protective case (e.g., the protective cover 700) according to other embodiments of the present disclosure may include a polymer composition including a recycled polyamide, a new polyamide including at least one polyamide component, glycidyl group-modified ethylene-octene-based copolymer, and an inorganic filler as a protective case that is disposed adjacent to at least a portion of an external surface of an electronic device to protect the electronic device from external impact. In some embodiments, the recycled polyamide may include material collected from marine plastic waste.

Also embodiments disclosed in the specification and drawings of this document are merely presented as specific examples to easily explain the technical content according to the embodiments of the disclosure and help the understanding of the embodiments of the disclosure, but they are not intended to limit the scope of the embodiments of the disclosure. Therefore, all changes or modifications derived from the technical ideals of the various embodiments of the disclosure should be interpreted to be included in the scope of the various embodiments of the disclosure in addition to the embodiments disclosed herein.

## Claims

1. A polymer composition comprising:
a recycled polyamide;
a new polyamide comprising at least one polyamide component;
a glycidyl group-modified ethylene-octene-based copolymer; and
an inorganic filler.

2. The polymer composition of claim 1, wherein the recycled polyamide comprises a polyamide collected from marine plastic waste.

3. The polymer composition of claim 1, comprising 10 to 30% by weight of the recycled polyamide, 1 to 50% by weight of the new polyamide, 0.1 to 10% by weight of the glycidyl group-modified ethylene-octene-based copolymer, and 30 to 70% by weight of the inorganic filler.

4. The polymer composition of claim 1, wherein the new polyamide comprises polyamide PA6 and a modified polyamide having a benzene ring.

5. The polymer composition of claim 4, comprising 1 to 30% by weight of the polyamide PA6 and 1 to 20% by weight of the modified polyamide.

6. An electronic device comprising:
a display disposed toward a first direction;
a housing comprising an inner space having an opening opened in the first direction;
a substrate portion disposed inside the housing; and
a support member supporting the substrate portion with respect to the housing and comprising a non-conductive material, wherein
the support member comprises a polymer composition, the polymer composition comprising:
a recycled polyamide,
a new polyamide comprising at least one polyamide component,
a glycidyl group-modified ethylene-octene-based copolymer, and
an inorganic filler.

7. The electronic device of claim 6, wherein the recycled polyamide comprises a polyamide collected from marine plastic waste.

8. The electronic device of claim 6, wherein the polyamide comprises polyamide PA6 and a modified polyamide having a benzene ring.

9. The electronic device of claim 6, wherein the polymer composition has a tensile strength of 2300 kgf/cm² or more and a notched Izod impact strength of 14 kgf·cm/cm or more.

10. The electronic device of claim 6, wherein the polymer composition has a thermal stability with a weight loss of 2.5% or less when heated at 230°C for 30 minutes, and has a moisture absorption amount of 1% by weight or less when immersed in water for 24 hours..

11. A protective case, disposed adjacent to at least a portion of an external surface of an electronic device to protect the electronic device from external impact, the protective case comprising a polymer composition comprising:
a recycled polyamide;
a new polyamide comprising at least one polyamide component;
a glycidyl group-modified ethylene-octene-based copolymer; and
an inorganic filler.

12. The protective case of claim 11, wherein the recycled polyamide comprises a polyamide collected from marine plastic waste.

13. The protective case of claim 11, wherein the new polyamide comprises polyamide PA6 and a modified polyamide having a benzene ring.

14. The protective case of claim 11, wherein the polymer composition has a tensile strength of 2300 kgf/cm² or more, and a notched Izod impact strength of 14 kgf·cm/cm or more.

15. The protective case of claim 11, wherein the polymer composition has a thermal stability with a weight loss of 2.5% or less when heated at 230°C for 30 minutes, a moisture absorption of 1% by weight or less when immersed in water for 24 hours.
